# FASCICULE DE BREVET EUROPEEN

(11) **EP 4 444 617 B1**
(45) Date de publication et mention de la délivrance du brevet: **29.04.2026**
(21) Numéro de dépôt: 22829791.7
(22) Date de dépôt: 02.12.2022
(51) Int. Cl.: E05D 15/06, E05F 1/16

(54) **CLOISON POUR AGENCEMENT DE SIÈGE D'AÉRONEF AVEC PORTE COULISSANTE ET AGENCEMENT DE SIÈGE D'AÉRONEF ASSOCIÉ**
TRENNWAND FÜR EINE FLUGZEUGSITZANORDNUNG MIT SCHIEBETÜR UND ZUGEHÖRIGE FLUGZEUGSITZANORDNUNG
PARTITION FOR AIRCRAFT SEAT ARRANGEMENT WITH SLIDING DOOR AND ASSOCIATED AIRCRAFT SEAT ARRANGEMENT

(30) Priorité: 07.12.2021 FR 2113067
(43) Date de publication de la demande: 16.10.2024
(73) Titulaire: Safran Seats, 78370 Plaisir (FR)
(72) Inventeur: LIGONNIERE, Laurent, 77550 MOISSY CRAMAYEL (FR); CAZALIS, Olivier, 77550 MOISSY CRAMAYEL (FR); RAJHI, Mourad, 77550 MOISSY CRAMAYEL (FR); BERNARDO DE MORAIS, José, 77550 MOISSY CRAMAYEL (FR)
(74) Mandataire: Casalonga
(86) Numéro de dépôt international: PCT/FR2022/052235
(87) Numéro de publication internationale: WO 2023/105145

(56) Documents cités:
- WO-A1-2017/066559
- WO-A1-2018/184778
- WO-A1-2020/020658
- FR-A1- 3 089 952

## Description

### Domaine technique

L'invention concerne, de manière générale, les aménagements de cabine d'un véhicule tel qu'un aéronef.

En particulier, l'invention concerne les aménagements de cabine d'aéronefs proposant aux passagers, notamment de classe affaire, des suites privatives dotées d'un ouvrant, tel qu'une porte déployable.

### Techniques antérieures

WO 2018/184778 A1 décrit une cloison pour agencement de siège d'aéronef. Dans les aéronefs équipés de telles suites privatives, l'ouvrant est en général coulissant et permet de fermer la cloison entre le passager et le couloir de l'aéronef, de façon à définir un espace d'intimité et d'isolement au passager.

Dans un aéronef, l'un des enjeux primordiaux est la gestion du poids des aménagements de cabine embarqués ainsi que la gestion de la densité d'implantation des aménagements, tout en garantissant les besoins de confort pour les passagers et le respect des exigences de sécurité.

Une telle cloison avec porte déployable peut s'avérer dangereuse pour le passager en cas d'urgence, en présence d'un dysfonctionnement de la cloison. Ainsi, en cas de dysfonctionnement une fois la porte déployée, il existe un risque que la porte soit bloquée en position, rendant impossible l'accès aux issues de secours.

Le but de l'invention est donc de permettre au passager d'ouvrir la cloison même en cas de dysfonctionnement, c'est-à-dire en cas de blocage en position de fermeture, notamment en cas d'évacuation d'urgence.

Un autre but est de proposer un tel système qui respecte les mêmes impératifs de simplicité, de légèreté et de compacité que la cloison en elle-même.

L'invention a donc pour objet une cloison selon la revendication 1.

Des caractéristiques préférées de l'invention sont définies dans les revendications dépendantes.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig1] illustre une coupe longitudinale d'une cloison selon l'invention en position d'ouverture ;
[Fig2] illustre une coupe longitudinale d'une cloison selon l'invention en position de fermeture ;
[Fig3] illustre une vue en coupe de dessus d'un premier mode de réalisation d'une liaison amovible de la cloison, en position de solidarisation ;
[Fig4] montre la liaison amovible de la figure 3, en position de désolidarisation ;
[Fig5A] illustre une cloison comprenant une liaison amovible selon un deuxième mode de réalisation qui ne fait pas partie de l'invention; et
[Fig5B] illustre une vue en perspective de la liaison amovible de la figure 5A.

### Exposé détaillé d'au moins un mode de réalisation

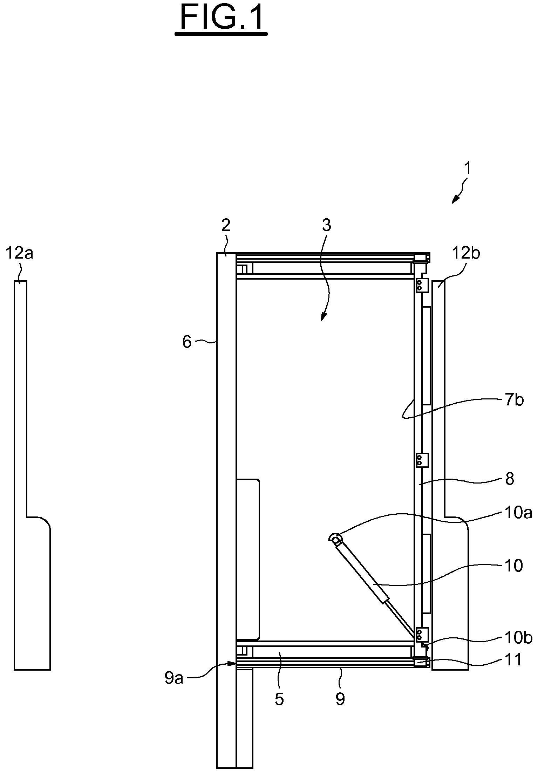

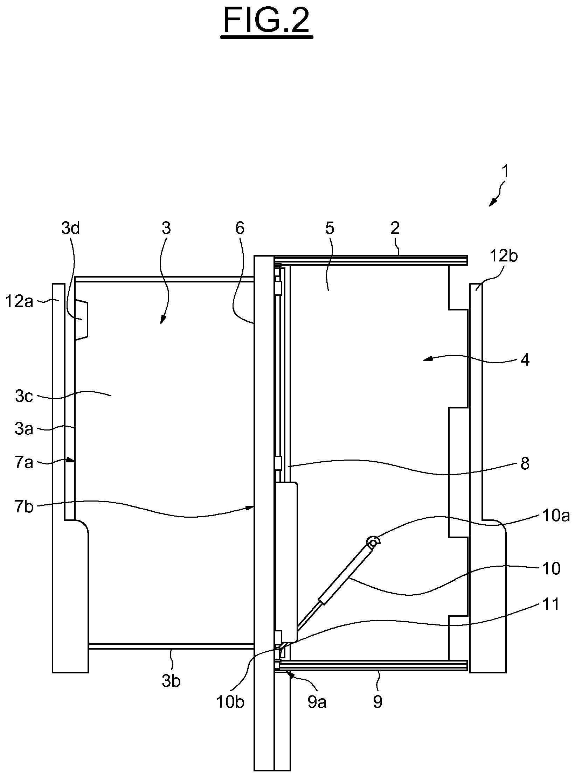

On a représenté schématique sur les figures 1 et 2 une coupe longitudinale d'une cloison 1 selon l'invention.

La cloison 1 est une cloison particulièrement destinée à être utilisée dans un véhicule pour permettre de définir un agencement d'un siège d'un passager dans un espace commun. Par exemple, le véhicule peut être un aéronef, l'agencement de siège étant destiné à être implanté en classe affaire de la cabine.

La cloison 1 comprend une partie fixe 2 et une porte coulissante 3 mobile entre une position d'ouverture représentée sur la figure 1 dans laquelle la porte 3 est escamotée dans un logement 4 pratiqué dans la partie fixe 2 et une position de fermeture représentée sur la figure 2 dans laquelle la porte 3 est sortie du logement 4.

La partie fixe 2 est représentée sur les figures 1 et 2 en coupe longitudinale. La partie fixe 2 comprend une surface intérieure 5 parallèle à la porte coulissante 3. La surface intérieure 5 peut être la face intérieure de la paroi de la partie fixe 2 ou une surface fixée à la partie fixe 2 et disposée entre la paroi de la partie fixe et le plan contenant la porte coulissante 3. Dans ce deuxième cas représenté sur les figures 1 et 2, la surface intérieure 5 comprend un ensemble de trous circulaires afin d'une part d'économiser la quantité de matière pour fabriquer la surface 5, et d'autre part pour alléger la surface 5. La surface intérieure 5 est fixe par rapport à la partie fixe 2 tout au long du mouvement de la porte mobile 3.

La partie fixe 2 est creuse en ce qu'elle comprend une cavité intérieure définissant un logement 4 destiné à recevoir la porte coulissante 3. La partie fixe 2 comprend de plus une ouverture verticale latérale 6 permettant d'accéder au logement 4.

La porte coulissante 3 est mobile selon un axe de coulissement parallèle à la surface intérieure 5 et passant par l'ouverture 6. La porte coulissante 3 comprend une hauteur 3a et une largeur 3b, la largeur 3b étant parallèle à l'axe de coulissement et la hauteur 3a étant perpendiculaire à cet axe de coulissement et parallèle à l'ouverture 6.

La porte coulissante 3 comprend par exemple un panneau de porte plan 3c et une poignée 3d positionnée sur une extrémité de la porte 7a qui est opposée à une autre extrémité de la porte 7b, cette autre extrémité 7b étant en regard de la partie fixe 2 en position de fermeture représentée figure 2.

Dans la position d'ouverture, la porte coulissante 3 est insérée complètement dans le logement 4 et est donc escamotée. De cette manière, la porte coulissante 3 n'est pas un obstacle et la cloison 1 comprend une ouverture permettant au passager de passer. A l'inverse, dans la position de fermeture, la porte coulissante 3 est disposée totalement hors du logement 4 et obstrue donc l'ouverture. La cloison 1 est donc alors fermée et le passager est isolé du reste de la cabine de l'aéronef.

La cloison 1 comprend un dispositif d'assistance mécanique au mouvement de la porte coulissante 3.

Le dispositif d'assistance mécanique comprend une monture de coulissement 8, un rail de guidage 9, et un moyen d'assistance mécanique 10 bistable.

La monture de coulissement 8 soutient la porte coulissante 3 et est fixe par rapport à cette porte 3.

Le rail de guidage 9 est disposé dans le logement 4, par exemple en bas du logement 4 de façon à définir l'axe de coulissement de la porte 3. Le rail de guidage 9 est donc positionné de façon à ce que la porte coulissante 3 puisse franchir l'ouverture 6 entièrement durant son mouvement sur le rail 9 entre les positions d'ouverture et de fermeture. Le rail de guidage 9 s'étend sur une longueur environ égale à la largeur 3b de la porte. De plus, le rail de guidage 9 comprend une première extrémité 9a disposée sensiblement au niveau de l'ouverture 6.

Possiblement, le dispositif d'assistance mécanique comprend deux rails de guidage 9, par exemple disposés respectivement en haut et en bas du logement 4.

La monture de coulissement 8 comprend un moyen de coulissement sur le rail 9 tel qu'un patin 11 monté sur le rail 9. Ainsi, la monture de coulissement 8 est apte à faire coulisser la porte 3 entre les positions d'ouverture et de fermeture.

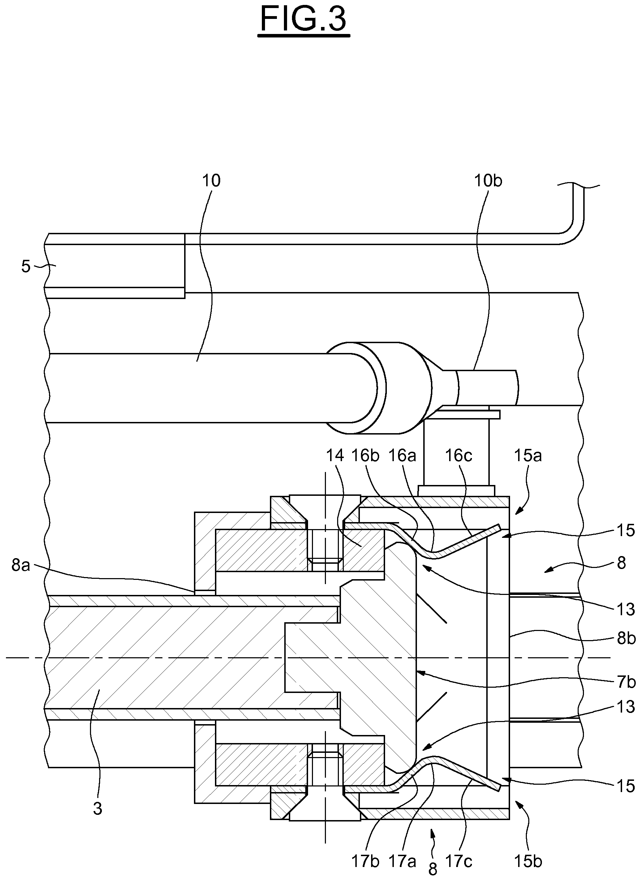

Plus particulièrement, la monture de coulissement 8 de la porte 3 a une forme profilée en « U » et enserre la porte 3, comme représenté sur la figure 3. La figure 3 illustre une vue du dessus de la porte 3 soutenue par la monture 8.

Dans un mode de réalisation dans lequel deux rails de guidage 9 sont disposés en haut et en bas respectivement du logement 4, la monture de coulissement 8 est en forme de « O » et enserre complément la porte 3.

La monture de coulissement 8 est disposée à l'extrémité 7b de la porte 3. De cette manière, la longueur de course du patin 11 sur le rail 9 est maximale de façon à faire sortir complètement la porte 3 du logement 4 en position de fermeture de la cloison 1 et à l'escamoter complètement en position d'ouverture.

Le moyen d'assistance mécanique 10 est un vérin à gaz bistable. Le vérin à gaz bistable 10 est fixé par une première extrémité 10a à la partie fixe 2 et par une extrémité opposée 10b à la monture de coulissement 8. Plus précisément, l'extrémité 10a du vérin à gaz est fixée à la surface intérieure 5.

Le vérin à gaz est dit bistable en ce qu'il comprend deux positions de stabilité opposées correspondant respectivement à la position d'ouverture et à la position de fermeture. Plus précisément, le vérin est fixé par son extrémité 10a à la surface intérieure 5 de la partie fixe 2 en un point milieu entre la position de l'extrémité 7b en position de fermeture et la position de l'extrémité 7b en position d'ouverture de la cloison 1.

Ainsi, durant le coulissement de la porte 3 via le coulissement de la monture 8, l'extrémité 10a reste fixe et l'extrémité 10b coulisse selon l'axe de coulissement. Le vérin 10 est donc monté en pivot autour de l'axe perpendiculaire à la surface intérieure 5 et portant l'extrémité 10a, et comprend dans sa course un point de bascule. Avant d'avoir franchi ce point de bascule, le vérin 10 freine le mouvement de la monture 8 soutenant la porte 3 et tend ainsi à résister au déplacement entre les positions d'ouverture et de fermeture de la cloison 1. Après avoir franchi le point de bascule en revanche, le vérin 10 exerce sur la monture 8 une force de poussée tendant à favoriser le déplacement entre les positions d'ouverture et de fermeture de la cloison 1. Le point de bascule est localisé sensiblement au milieu de la course de la monture 8 entre les positions d'ouverture et de fermeture.

Ainsi, le dispositif d'assistance mécanique agit sur la porte 3 entre les positions d'ouverture et de fermeture de la cloison 1 et est adapté pour appliquer un effort de freinage et un effort de poussée lors de phases respectives successives du déplacement de la porte 3 entre les positions d'ouverture et de fermeture.

Le vérin à gaz 10 est disposé de manière à appliquer un effort sur la monture 8 lorsque la porte 3 est en position de fermeture ou d'ouverture. De plus, la cloison 1 comprend une première butée 12a et une deuxième butée 12b verticales et disposées respectivement de part et d'autre de la porte 3 sur l'axe de coulissement défini par le rail 9.

Plus précisément les butées 12a et 12b sont possiblement identiques, et sont disposées respectivement de part et d'autre de l'ouverture 6, et à une distance de l'ouverture 6 équivalente à la largeur 3b de la porte 3.

De cette manière, l'extrémité verticale 7a de la porte 3 s'appuie contre la première butée 12a en position de fermeture et l'extrémité 7b de la porte 3 s'appuie contre la deuxième butée 12b en position d'ouverture.

L'utilisation d'un vérin à gaz permet de plus de contrôler la vitesse de sortie de la porte 3. En effet, le vérin est de faible puissance et permet de contrôler la vitesse de déplacement de la porte 3 et d'amortir les positions en fin de course, par exemple pour réduire le risque de pincement en position de fermeture.

Le dispositif d'assistance mécanique est donc apte à maintenir la porte 3 dans les positions d'ouverture et de fermeture. Ainsi, la cloison 1 reste dans la position ouverte ou fermée quel que soit l'incidence du vol de l'avion.

Le dispositif d'assistance mécanique est activable manuellement par le passager via la poignée 3d de la porte 3.

Plus particulièrement, lorsque la cloison 1 est ouverte, la porte 3 est escamotée dans le logement 4 de la partie fixe 2. La poignée 3d étant positionnée sur l'extrémité 7a de la porte 3, elle est accessible au passager. Le passager peut donc tirer sur la porte 3 dans le sens de la fermeture de cloison. Le mouvement de la porte 3 comprend deux phases successives. Au cours de la première phase entre la position d'ouverture et le point de bascule, le passager doit tirer sur la porte dans le sens de la fermeture assez fortement pour contrer l'effort de freinage du vérin à gaz 10. Au cours de la deuxième phase entre le point de bascule et la position de fermeture, l'utilisateur peut relâcher la porte 3, le vérin exerçant une force de poussée déplaçant la porte 3 jusqu'à fermeture de la cloison 1.

Le mécanisme de déploiement de la porte 3 reposant ainsi essentiellement sur le vérin 10 en position bistable, le dispositif selon l'invention est épuré et permet de gagner en légèreté par une réduction du nombre de pièces nécessaires. De plus, la simplicité du dispositif permet de gagner en compacité. En effet, la cloison 1 selon l'invention est utilisable pour une cabine d'aéronef à pitch court de l'ordre de 34 pouces tout en respectant les normes d'espace nécessaire à l'évacuation nommées Egress.

De plus, le mécanisme de déploiement est supporté par des organes mécaniques simples fiables et interchangeables.

Par ailleurs, la cloison 1 comprend une liaison amovible entre la porte 3 et la monture 8. Cette liaison, dont un premier mode de réalisation est représenté sur la figure 3, a pour objectif de solidariser la porte 3 à la monture 8 afin de permettre le coulissement de la porte 3 via le coulissement de la monture 8. Cette liaison permet également au passager de manœuvrer la porte 3 en cas de défaillance du dispositif d'assistance mécanique ou du mécanisme de déploiement de la porte 3.

Elle permet ainsi une ouverture de la porte 3 en cas de blocage du mécanisme de déploiement en position fermée de la porte 3.

La liaison amovible comprend des moyens libérables de solidarisation de la monture 8 à la porte 3.

Dans un premier mode de réalisation illustré sur la figure 3, les moyens libérables de solidarisation comprennent un épaulement 13 disposé à l'extrémité 7b de la porte 3, un élément de butée intérieur 14 de la monture 8 et des ressorts à lame 15.

L'épaulement 13 est disposé à l'extrémité 7b de la porte 3 et est fixé à cette extrémité 7b. L'épaulement 13 s'étend perpendiculairement à la porte 3 et de part et d'autre de la porte 3. Plus précisément, la monture 8 enserre la porte 3 au niveau de l'extrémité 7b et de l'épaulement 13.

L'élément de butée intérieur 14 est disposé dans la monture 8 entre l'épaulement 13 et une première extrémité verticale 8a de la monture 8 en regard de l'ouverture 6, en position d'ouverture de la cloison 1. Ainsi, lorsque la porte 3 est tirée par un passager dans le sens de la fermeture de la cloison 1, l'épaulement 13 vient en butée contre l'élément 14 et applique un effort sur la monture 8 de façon à la faire coulisser avec la porte 3.

L'épaulement 13 est maintenu plaqué contre l'élément de butée intérieur 14 par des ressorts à lame 15. Plus précisément, les ressorts à lame 15 comprennent deux ressorts à lame 15a et 15b comprenant respectivement au moins une lame, cette lame étant convexe par rapport à la porte 3. Les ressorts 15a et 15b sont disposés symétriquement par rapport à l'axe de coulissement à l'intérieur de la monture 8, entre l'élément de butée intérieur 14 et une deuxième extrémité verticale 8b opposée à l'extrémité 8a. La convexité des ressorts à lame 15a et 15b définit un rétrécissement de l'axe de passage de la porte 3 dans la monture 8, qui bloque l'épaulement 13 en position contre l'élément de butée intérieur 14. Ainsi, lorsque l'épaulement 13 est immobilisé entre l'élément de butée intérieur 14 et les ressorts à lame 15, la porte 3 est solidaire de la monture 8.

Le rétrécissement maximal de l'axe de passage de la porte 3 dans la monture 8 est positionné aux sommets 16a et 17a respectifs des convexités de chaque ressort 15a et 15b. Ainsi, les ressorts à lame 15a et 15b comprennent respectivement deux portions 16b et 16c pour le ressort 15a, et deux portions 17b et 17c pour le ressort 15b telles que les portions 16b et 17b, respectivement 16c et 17c, sont en regard et symétriques par rapport à l'axe de passage de la porte 3 dans la monture 8. Plus précisément, les portions 16b et 17b se rapprochent l'une de l'autre jusqu'à leurs extrémités respectives constituées par les sommets 16a et 17a, et les portions 16c et 17c s'éloignent l'une de l'autre depuis les sommets 16a et 17a, respectivement.

L'épaulement 13 est immobilisé entre l'élément de butée intérieur 14 et les portions 16b et 17b.

La liaison amovible peut être désactivée pour que, en cas de blocage de la monture 8, la porte 3 soit désolidarisée et puisse être ramenée en position d'ouverture de la cloison 1.

Plus précisément, la liaison entre la monture 8 et la porte 3 peut être désactivée sous l'action d'un effort supérieur à un seuil prédéterminé exercé sur la porte 3 selon un sens de l'axe de coulissement. Ainsi, lorsque le dispositif d'assistance mécanique dysfonctionne et que la monture 8 soutenant la porte 3 est bloquée sur le rail 9 dans une position dans laquelle la porte est partiellement ou totalement disposée hors du logement 4, le passager pousse suffisamment fort sur la porte 3 selon l'axe du rail 9 vers la partie fixe 2 pour libérer la porte en la dégageant des ressorts.

En effet, l'épaulement 13 est au contact des portions 16b et 17b des ressorts à lame 15 se rapprochant l'unes de l'autre. De cette façon, lorsque la monture 8 est bloquée sur le rail 9 et que le passager pousse sur la porte 3 dans le sens correspondant, l'épaulement 13 de l'extrémité 7b exerce un effort sur les portions 16b et 17b tendant à les écarter de l'axe de passage de la porte 3. Lorsque l'effort de poussée dépasse un seuil prédéterminé, les ressorts 15a et 15b sont suffisamment écartés l'un de l'autre pour permettre le coulissement de l'épaulement 13 entre eux. La porte 3 est n'est alors plus retenue dans la direction du logement 4, et le passager peut la rentrer dans le logement 4 et ainsi ouvrir la cloison 1.

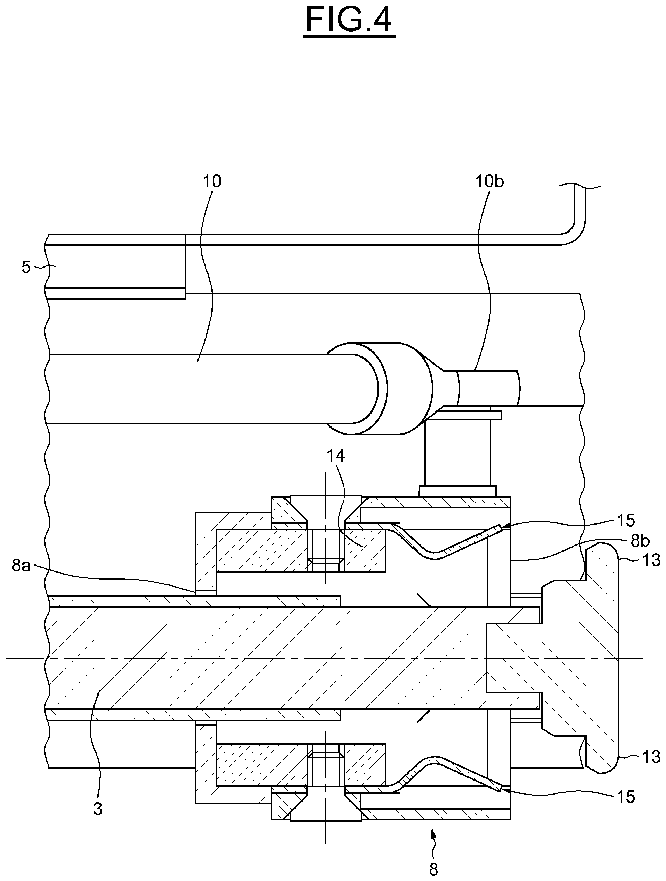

La figure 4 illustre une vue du premier mode de réalisation de la figure 3 dans laquelle la porte 3 et l'épaulement 13 sont libérés des moyens de solidarisation. Les ressorts 15a et 16a ont repris leur forme initiale après le passage de l'épaulement 13. L'écartement initial entre les sommets 16a et 17a étant supérieur à l'épaisseur de la porte 3, la porte 3 n'est plus solidarisée en coulissement vers la butée 12b avec la monture 8. Le passager peut donc exercer une poussée sur la porte 3 de manière à la rentrer dans le logement 4.

De plus, lorsque le passager tire sur la porte 3 dans la direction inverse, c'est-à-dire dans la direction de la butée 12a, l'épaulement 13 peut réaliser l'opération inverse et venir exercer un effort sur les ressorts 15 de sorte que les portions 16c et 17c s'écartent jusqu'à permettre le passage de l'épaulement 13. L'épaulement 13 se retrouve alors dans la position initiale de la figure 3 et la porte 3 est de nouveau solidarisée à la monture 8.

De préférence, la cloison 1 peut comprendre un ensemble de telles liaisons amovibles disposées régulièrement sur l'extrémité 7b de la porte 3. Par exemple, la cloison 1 comprend trois liaisons amovibles sur l'extrémité 7b respectivement en haut, en bas et au milieu de l'extrémité 7b.

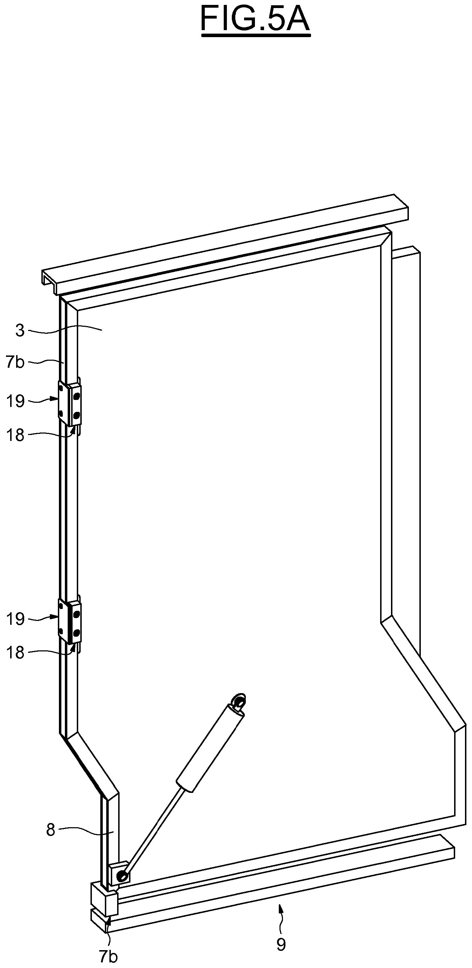

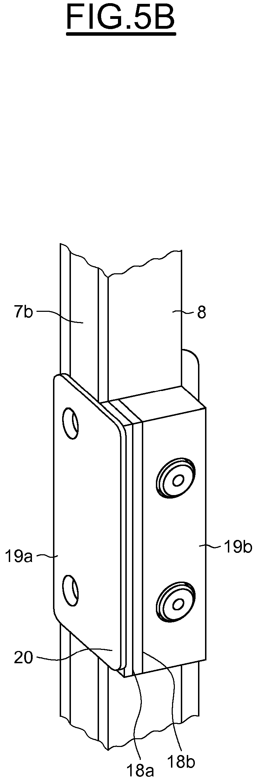

Un deuxième mode de réalisation de la liaison amovible est représenté sur les figures 5A et 5B.

La figure 5A représente la cloison 1 équipée de deux liaisons amovibles selon le deuxième mode de réalisation, et la figure 5B représente une vue en perspective d'une liaison amovible selon le deuxième mode de réalisation.

Dans le deuxième mode de réalisation, la liaison amovible comprend deux aimants 18a et 18b. L'aimant 18a est fixé à la porte 3 et l'aimant 18b est fixé à la monture 8. La solidarisation de la porte 3 à la monture 8 est assurée par l'attraction réciproque des aimants 18a et 18b.

Plus précisément, l'aimant 18a est fixé à la porte 3 par l'intermédiaire d'un premier support 19a, et l'aimant 18b est fixé à la monture 8 par l'intermédiaire d'un deuxième support 19b. Les supports 19a et 19b, et les aimants 18a et 18b sont disposés respectivement sur la porte 3 et la monture 8 de sorte que l'axe de liaison entre les aimants 18a et 18b soit parallèle à l'axe de coulissement de la porte 3, mais non confondu. Plus précisément, le support 19a est une plaquette disposée sur l'épaisseur de l'extrémité 7b de la porte 3, c'est-à-dire sur la surface de la porte 3 en regard de la butée 12b. De plus, le support 19a s'étend perpendiculairement au-delà de la porte 3 de manière à définir un talon 20 sur lequel est disposé l'aimant 18a. Aussi, le support 19b est fixé sur une surface de la monture 8 parallèle à la porte 3, et l'aimant 18b est disposé sur le support 19b.

De cette façon, lorsque la monture 8 est bloquée, le passager peut exercer une force de poussée sur la porte 3 dans la direction de la butée 12b supérieur à un seuil prédéterminé de la force d'attraction des aimants 18a et 18b. Les aimants 18a et 18b sont alors désolidarisés, de même que la porte 3 et la monture 8. L'axe de liaison entre les aimants 18a et 18b étant parallèle mais non confondu avec l'axe de coulissement de la porte 3, la force de poussée exercée par le passager provoque le coulissement de la porte 3 de façon à rentrer la porte 3 dans le logement 4.

Ainsi, dans les deux modes de réalisation, la liaison amovible est désactivable par une poussée exercée sur la porte selon un sens de l'axe de coulissement.

## Revendications

1. Cloison (1) pour agencement de siège d'aéronef comprenant une partie fixe (2) et une porte coulissante (3) mobile selon un axe de coulissement entre une position d'ouverture dans laquelle la porte (3) est escamotée dans un logement (4) pratiqué dans la partie fixe (2) et une position de fermeture dans laquelle la porte (3) est sortie du logement (4), la cloison (1) comprenant un dispositif principal de coulissement (8,9) de la porte (3) comprenant une monture de coulissement (8) soutenant la porte (3), la cloison comprenant une liaison amovible entre la porte (3) et la monture (8) désactivable en cas de défaillance du dispositif principal de coulissement, la liaison amovible étant désactivable par un effort supérieur à un seuil prédéterminé exercé sur la porte (3) selon l'axe de coulissement dans le sens de l'ouverture, la liaison amovible comprenant des moyens libérables de solidarisation (15 ; 18) de la monture (8) à la porte (3) aptes à libérer la porte (3) sous l'effet de l'effort supérieur au seuil prédéterminé, la cloison étant **caractérisée en ce que** la porte (3) comprend un épaulement (13) disposé sur une extrémité (7b) de la porte (3) en regard de la partie fixe (2) en position de fermeture de la cloison (1), les moyens de solidarisation (15) comprenant deux ressorts à lames (15a, 15b) disposés en regard l'un de l'autre configurés d'une part pour maintenir l'épaulement (13) en translation lors du fonctionnement du dispositif principal et d'autre part pour s'écarter sous l'effet dudit effort de façon à libérer l'épaulement (13) lors de la défaillance du dispositif principal.

2. Agencement de siège d'aéronef comprenant un siège et une cloison (1) selon la revendication 1.

3. Agencement selon la revendication 2, dans lequel la cloison (1) est disposée de sorte que la porte (3) en position de fermeture isole le siège d'un couloir de l'aéronef.

## Patentansprüche

1. Trennwand (1) für die Anordnung eines Flugzeugsitzes, die einen festen Teil (2) und eine Schiebetür (3) umfasst, die sich entlang einer Schiebeachse zwischen einer Öffnungsposition, in der die Tür (3) in einer in dem festen Teil (2) angebrachten Aufnahme (4) versenkt ist, und einer Schließposition, in der die Tür (3) aus der Aufnahme (4) herausgeführt ist, bewegt, wobei die Trennwand (1) eine Hauptschiebevorrichtung (8, 9) der Tür (3) umfasst, die eine Schiebehalterung (8) umfasst, die die Tür (3) stützt, wobei die Trennwand eine lösbare Verbindung zwischen der Tür (3) und der Halterung (8) umfasst, die bei Ausfall der Hauptverschiebevorrichtung deaktiviert werden kann, wobei die lösbare Verbindung durch eine Kraft, die größer ist als eine vorbestimmte Schwelle, die auf die Tür (3) gemäß der Schiebeachse in Öffnungsrichtung ausgeübt wird, deaktiviert werden kann, wobei die lösbare Verbindung lösbare Verbindungsmittel (15 ; 18) von der Halterung (8) bis zu der Tür (3) umfasst, die geeignet sind, die Tür (3) unter der Wirkung der Kraft, die den vorbestimmten Schwellenwert übersteigt, zu lösen, wobei die Trennwand **dadurch gekennzeichnet ist, dass** die Tür (3) eine Schulter (13) umfasst, die an einem Ende (7b) der Tür (3) gegenüber dem festen Teil (2) in Schließposition der Trennwand (1) angebracht ist, wobei die Verbindungsmittel (15) zwei Blattfedern (15a, 15b) umfassen, die gegenüberliegend angebracht sind, um einerseits die Schulter (13) während des Betriebs der Hauptvorrichtung in Translation zu halten und um sich andererseits unter der Wirkung der Kraft zu bewegen, um die Schulter (13) bei Ausfall der Hauptvorrichtung zu lösen.

2. Anordnung eines Flugzeugsitzes, umfassend einen Sitz und eine Trennwand (1) nach Anspruch 1.

3. Anordnung nach Anspruch 2, wobei die Trennwand (1) so angebracht ist, dass die Tür (3) in der Schließposition den Sitz von einem Gang des Flugzeugs isoliert.

## Claims

1. A partition (1) for an aircraft seat arrangement comprising a stationary portion (2) and a sliding door (3) capable of moving along a sliding axis between an open position, in which the door (3) is retracted into a recess (4) provided in the stationary portion (2) and a closed position, in which the door (3) is extended from the recess (4), the partition (1) comprising a main device (8,9) for sliding the door (3) comprising a sliding mount (8) supporting the door (3), the partition comprising a removable connection between the door (3) and the mount (8) that can be deactivated in the event of failure of the main sliding device, the removable connection being capable of being deactivated by a force greater than a predetermined threshold exerted on the door (3) along the sliding axis in the opening direction, the removable connection comprising releasable securing means (15; 18) of the mount (8) to the door (3) capable of releasing the door (3) under the effect of the force greater than the predetermined threshold, the partition being **characterised in that** the door (3) comprises a shoulder (13) disposed on an end (7b) of the door (3) facing the stationary portion (2) in the closed position of the partition (1), the securing means (15) comprising two leaf springs (15a, 15b) disposed facing each other configured on the one hand to hold the shoulder (13) in translation during the operation of the main device and on the other hand to move away under the effect of said force so as to release the shoulder (13) upon failure of the main device.

2. An aircraft seat arrangement comprising a seat and a partition (1) according to claim 1.

3. The arrangement according to claim 2, wherein the partition (1) is disposed such that the door (3) in the closed position isolates the seat from a corridor of the aircraft.
